# EUROPEAN PATENT APPLICATION

(11) **EP 4 749 544 A1**
(43) Date of publication of application: **27.05.2026**
(21) Application number: 25218454.4
(22) Date of filing: 25.11.2025
(51) Int. Cl.: G06Q 10/0836, G06Q 10/083, A47G 29/14

(54) **PARCEL LOCKER SYSTEM AND LOCKER BANK DEVICE ALLOWING FOR DELIVERY OF ONE SHIPMENT TO MULTIPLE RECIPIENT BOXES**

(30) Priority: 25.11.2024 US 202418958460
(71) Applicant: Quadient Technologies France, 92220 Bagneux (FR)
(72) Inventor: LANZI, Daniel, 92220 BAGNEUX (FR)
(74) Representative: Cabinet Beau de Loménie

(57) **Abstract**

Improvements to automated, computerized parcel locker bank systems are provided that allow for a shipment containing multiple physical parcels to be delivered to multiple compartments within a single locker bank without the need for additional package labels or the like. The disclosed embodiments allow for more efficient use of parcel locker systems in contrast to conventional systems that require a one-to-one correspondence between shipments and locker bank compartments.

## Description

### BACKGROUND

Electronic locker bank systems are used for delivery and storage of various kinds of items. Typically a sender provides a shipment, which may include one or more parcels, to a carrier, who then delivers the shipment to a compartment of a locker bank. The recipient is then notified that the shipment is ready to be retrieved from the locker bank and provided with a code or other mechanism to retrieve the shipment from the compartment at the locker bank where it was delivered.

### BRIEF SUMMARY

Embodiments disclosed herein provide devices, systems, techniques, and computer-readable instructions that allow for delivery of groups of parcels that are shipped in a common shipment from a sender to a recipient via a parcel locker system, where more than one compartment within a parcel locker is needed to store the parcels. For example, in an embodiment a locker bank having multiple locker compartments may receive user input indicating that a shipment is being delivered to the locker bank. The shipment may include multiple parcels but may have been assigned a single parcel number by the sender or an intermediary. In an embodiment, in response, the locker bank may open a first compartment of the locker bank; after receiving a user input indicating that an additional compartment is needed for the same shipment, the locker bank (or a management component of a locker bank system) may create data records for multiple compartments. Each data record may include, for example, the single parcel number assigned to the shipment, a compartment-specific parcel number assigned to a respective compartment, and an indication that the shipment includes multiple compartments. The locker bank system may sequentially open multiple compartments based upon a user indication that additional compartments are needed, until receiving user input indicating the delivery is complete.

### BRIEF DESCRIPTION OF THE DRAWINGS

FIG. 1 shows an example of a locker bank system.
FIG. 2 shows an example process for loading a shipment having multiple parcels into multiple locker bank compartments according to embodiments disclosed herein.
FIG. 3 shows an example process for retrieving parcels in a shipment having multiple parcels stored in multiple compartments according to embodiments disclosed herein.

### DETAILED DESCRIPTION

As previously described, electronic locker banks provide a variety of shipping, storage, and delivery infrastructure and options for retailers, carriers, shippers, and customers. Conventional parcel locker devices operate using [on the basis of] a "parcel number" or similar identifier, which refers to a unique identifier assigned to a shipment that is to be delivered to a locker in a locker bank. A single parcel number is used to identify the entire shipment (to a single recipient), regardless of how many physical parcels are included in the shipment. For example, a retailer may ship each item ordered by a customer individually, in separate physical packaging, or it may combine multiple items into a single physical package. Regardless of the number of physical parcels in a shipment from a sender to a single recipient, a single parcel number may be assigned to the group of parcels. The parcel number may be, for example, an alphanumeric identifier such as a tracking number used by carriers to track and provide updates of delivery status for a particular package.

Problems with conventional parcel locker operation may arise due to the conventional use of a single parcel number when a shipment includes more than one physical item. For example, because conventional parcel locker banks are designed and programmed to expect a one-to-one correspondence between parcel numbers and physical parcels, conventional parcel locker systems may not correctly manage the receipt of such shipments by an individual locker bank, and/or may not be able to successfully store and deliver such shipments to the intended recipient. In conventional locker bank systems, a shipper or courier would have to estimate the number and size of locker compartments needed ahead of time and generate or request multiple parcel numbers to match. However, if the estimate was incorrect, the courier still may be unable to deliver all physical parcels with a single parcel number to the estimated number of compartments.

Furthermore, in many parcel locker bank systems, it may be difficult or impossible to alter the behavior of shippers, and/or the one-to-one correspondence of parcels and locker compartments implemented by locker bank system(s), to accommodate situations in which the shipment includes more physical items than will fit in a single locker compartment. For example, some shippers such as wholesalers and retailers may assign a single "order number" to all items in an order, regardless of number, physical size, or other attributes. This behavior may be sufficiently engrained in the shipper's other electronic inventory management systems to be effectively unchangeable for compatibility with parcel locker bank systems. As another example, in some locker bank systems, it may be difficult, overly complex, or impossible to update embedded software at each physical locker bank to recognize situations in which shipments include multiple physical items that cannot all fit within an assigned compartment. As such, the behavior of parcel locker bank systems and shippers with respect to the parcel number or equivalent identifier may be considered "fixed," i.e., unchangeable for purposes of compatibility with shipments including more physical items.

Embodiments disclosed herein provide methods and systems that allow an electronic locker bank system to accept delivery of shipments including multiple parcels that together are too large to fit within a single locker compartment of the locker bank to which the shipment is being delivered.

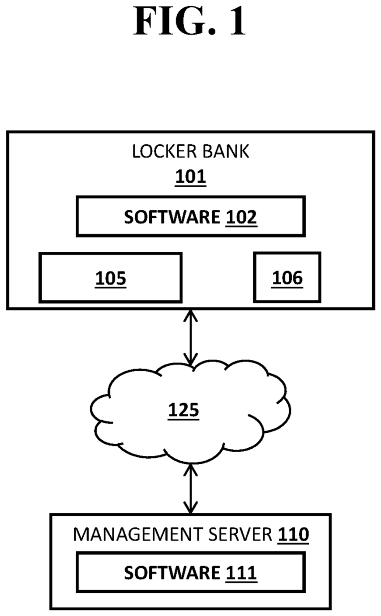

FIG. 1 shows an example of a parcel locker bank system, which also may be referred to as a "parcel locker system," "locker network," or the like, which includes one or more electronic locker banks 101. As used herein, a parcel locker or locker bank refers to a free standing structure or contained system, which may reside within other systems such as a parcel room, mailroom, or the like, which includes multiple compartments that are used to transfer goods from a sender to a recipient.

Each locker bank 101, may include multiple lockers 105, 106 within it, i.e., the individual compartments used to store items being transferred between a sender and a recipient. Each locker bank typically includes multiple lockers that may vary in size to allow for transfer of a variety of items. The operation of individual lockers within each locker bank may be the same as disclosed herein with respect to a locker bank unless noted otherwise or made clear by contextual requirements; for example, in some embodiments each locker within a locker bank may be managed as disclosed herein with respect to a locker bank. An individual locker within a locker bank also may be referred to as a "compartment" or "box" in the present disclosure. Each locker bank 101 may communicate with user devices such as mobile phones, tablets, or the like, via short-range local communications systems known in the art. For example, a locker bank 101 may provide an interface for carriers to provide parcel information, verify delivery, and the like, and/or for recipients to retrieve parcels that were previously delivered to the locker bank, such as via a mobile device. Each locker bank 101 may include local software 102 that manages local operation of the locker bank 101 and individual lockers 105, 106. For example, the local software 102 may lock, open, and store the status of individual lockers 105, 106 during operation of the locker bank 101.

Locker banks 101 may be in communication with a management server 110. The management server 110 may include software 111 configured to manage and control operation of the locker banks 101 in the network.

The locker bank management server 110 may communicate with one or more locker banks 101 via a communication network 125 such as virtual private network (VPN), the Internet, or the like. The management server 110 manages authorization access to the electronic locker bank and data regarding shipments handled by each electronic locker bank 101. As used herein, a "management server" may refer to any appropriate combination of one or more server-type computing devices, operating alone or in tandem, to provide the services disclosed herein. A management server may include one or more physical computer servers, which may operate as a cluster, coordinated network, cloud network service, or the like.

In a conventional system, a sender or carrier for a particular parcel will notify the parcel locker system, typically via management server 110 and associated software 111, that a parcel having a known parcel number is being delivered to a particular locker bank. For example, a notification may be sent by a carrier to a management server 110 that a parcel with parcel number 12358 is being delivered to locker bank ABCEH. The management server 110 may then provide the parcel number 12358 to locker bank ABCEH. When a delivery agent arrives at locker bank ABCEH, they may scan a label affixed to the parcel to provide the locker bank with the associated parcel number. The locker bank software 102 may then identify a suitable available locker 105, 106 to store the parcel, open the associated door, and receive the parcel from the delivery agent. The recipient is then notified that the parcel is available to retrieve, typically using the same parcel number 12358.

As noted above, when the parcel number 12358 includes multiple physical parcels in a conventional parcel locker system, the same parcel number is assigned to all of them. As such, they may not all be available within a single locker bank compartment when retrieved by the recipient, if the carrier was unable to fit them all into the compartment assigned by the management server 110.

In some embodiments, individual parcels within a single shipment may be assigned individual identifiers. Continuing the example above, an owner or manager of the parcel locker system could require shippers to assign individual parcel labels within a shipment such as 12358-A, 12358-B, and so on. As the parcels are delivered to a parcel bank as disclosed herein, the parcel bank and associated management server may track the individual parcels using those identifiers, for example to record which compartments store which parcels. Such an arrangement may be disfavored since it imposes additional requirements on the sender. In contrast, embodiments disclosed herein allow for delivery to multiple compartments without imposing additional requirements on the sender.

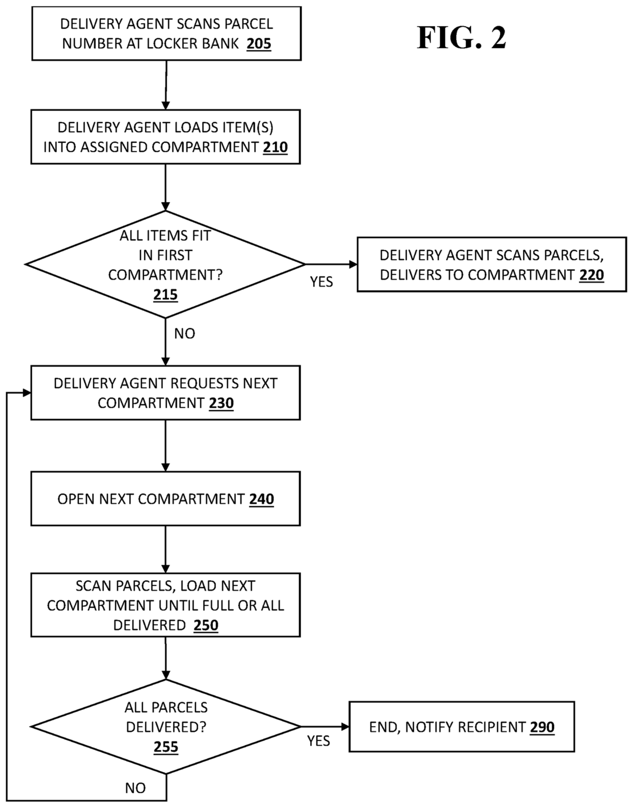

FIG. 2 shows a process according to embodiments disclosed herein for managing shipments that include multiple parcels, where it is determined at the time of delivery to the locker bank 101 that the physical parcels will not all fit in the assigned compartment 105, 106.

At 205, a delivery agent may arrive at a locker bank with a shipment containing multiple physical items, such as multiple parcels. As described above, typically a single parcel number is assigned to the entire shipment, without distinguishing between individual physical items in the shipment.

At 210, the delivery agent may invoke the conventional process for delivering a shipment to the locker bank and storing the shipment in a locker compartment. For example, the delivery agent may scan a machine-readable code, such as a bar code, at the locker bank. The locker bank may then consult with local and/or remote software to verify that the shipment is expected and, upon doing so, may open a compartment designated for the shipment. The compartment may have been selected by the locker system management software, such as software 111 in Figure 1, or it may have been designated in size or form factor by the sender. For example, the bar code may include, or be linked to, information indicating a minimum size locker compartment for the shipment. Even with such information, however, some conventional locker bank systems may not be able to accommodate multiple parcels in a single shipment. For example, even if a shipment indicates that a "large" compartment is needed, such indication may not take account of the particular way in which the shipment was packaged and sent by the sender. Accordingly, multiple compartments may still be needed, although the shipment has only a single parcel number assigned to it.

As part of the process, at 210, the locker bank typically will open the assigned locker compartment to be "loaded" with the shipment being delivered by the delivery agent. For example, the locker bank may unlock and open a compartment assigned to the shipment. The delivery agent may begin loading the physical items in the shipment into the indicated compartment.

At 215, if all items in the shipment fit in a single compartment, at 220, the delivery agent may load the parcels into the compartment in a conventional manner. For example, the delivery agent may scan the shipment barcode or otherwise indicate to the locker bank that the shipment has been loaded into the indicated compartment. In this case, that will mean that all physical parcels have been placed into the single compartment without the needed for additional space. The delivery agent may confirm that the shipment delivery is complete via a user interface at the locker bank, such as by selecting a "delivery complete" option or the like. In some embodiments, this and other functions of the disclosed "user interface" also may be performed via a portable device such as a tablet, smart phone, or the like. Typically a "pickup code" or other code may be generated and sent to the recipient, which the recipient can use to retrieve the parcels from the locker compartment. In some cases, the pickup code may include, or be generated from the parcel number.

The locker bank system may store a record indicating that the shipment has been delivered, which may not indicate that the shipment includes multiple parcels. For example, the record for the shipment stored by the locker system may store data such as the following:

| | |
|---|---|
| Parcel Number: | 12358 |
| Pickup Code: | ASDFG0987 |
| Multiple Box: | No |
| More Items: | No |
| Item Rank: | 1 |

In this example, the record stored for the shipment indicates the parcel number and pickup code, as well as fields that indicate whether additional compartments are needed ("Multiple Box") and whether more items after this compartment are included in the shipment ("More Items"). The record also may include an indication of the order in which multiple compartments are loaded in a single shipment ("Item Rank"), as described further below. The record may be stored by the locker management system and associated with the locker compartment into which the parcels were loaded. The record also may store an indication of the original parcel number (which in this case is identical to the stored parcel number), as well as any other information typically stored by the system in association with a delivery.

If all items do not fit in the indicated compartment at 215, the process continues as disclosed herein. Once the delivery agent has filled the first compartment, they may indicate to the parcel locker bank that additional compartments are needed. For example, the locker bank may include a selectable item on the user interface that indicates "additional box needed" or the like, which the delivery agent may activate at 230. Selecting the "additional box needed" option also may cause the parcels already loaded into the prior compartment to be considered "delivered."

At 240, the locker bank opens another compartment in response to the user action at 230. The locker bank software may generate a "new" parcel identifier for the second portion of the shipment that is loaded into the next compartment. For example, increasing integers may be appended to the parcel number to generate parcel numbers for each portion of the shipment that is being loaded into each compartment.

At 250, the delivery agent loads the next parcels into the newly-opened compartment, again continuing until the compartment is full.

At 255, if all parcels have been delivered, the delivery agent may select a "delivery complete" or equivalent option from the locker bank user interface, thereby completing delivery of the multi-parcel shipment. At 290, the recipient may be notified as with a conventional single-compartment delivery. For example, the recipient may be sent an electronic communication that includes a notification of completed delivery and a pickup code as previously described. The notification may indicate that multiple compartments are included, or the recipient may be notified of the multiple compartments when retrieving the parcels from the locker bank.

If all parcels have not been delivered at 255, the process may continue back to 230 when the delivery agent indicates again that another compartment is needed. The process may continue as previously disclosed for another compartment, through steps 230, 240, 250, 255. This process continues until all parcels in the shipment have been delivered to a compartment. More than one parcel may be delivered to some or all of the compartments used during the delivery process, with each compartment being opened when the delivery agent selects "additional box needed" or similar option via the user interface as described at 230.

The locker bank management system may store a data record for each compartment, similar to the single-compartment data previously disclosed. However, the data records may indicate that the compartment deliveries are part of a single shipment, as well as the order in which the compartments were loaded or an indication of how many and/or which compartments are included in the shipment. As a specific example, the records for three compartments storing parcels of a single shipment may include data such as the following:
First Compartment:

| | |
|---|---|
| Parcel Number: | 12358 |
| Original Parcel Number: | 12358 |
| Pickup Code: | ASDFG0987 |
| Multiple Box: | Yes |
| More Items: | Yes |
| Item Rank: | 1 |

Second Compartment:

| | |
|---|---|
| Parcel Number: | 12358-2 |
| Original Parcel Number: | 12358 |
| Pickup Code: | ASDFG0987 |
| Multiple Box: | Yes |
| More Items: | Yes |
| Item Rank: | 2 |

Third Compartment:

| | |
|---|---|
| Parcel Number: | 12358-3 |
| Original Parcel Number: | 12358 |
| Pickup Code: | ASDFG0987 |
| Multiple Box: | Yes |
| More Items: | No |
| Item Rank: | 3 |

The parcel number assigned to the first compartment may be identical to the original parcel number, as shown in this example. However, the data record for the first compartment also indicates that there are multiple compartments storing parcels in the shipment ("Multiple Box" is "yes"), and that there are additional items stored in compartments after the first ("More Items" is "yes").

The second compartment loaded by the delivery agent has a parcel number with an appended "2", i.e., "12358-2," to indicate that it is the second compartment in the shipment. The data record also indicates that the shipment spans multiple compartments, and that there is at least one compartment after the second.

Finally, the third compartment data record is assigned parcel number "12358-3" and indicates that it is the final compartment in the shipment ("More Items" is "no"). Notably, all compartments in the shipment are associated with the original parcel number as well as being assigned a "new" parcel number for the parcels in each compartment. Although a "parcel number" is assigned to each compartment used, each compartment may include more than one parcel. Continuing the example above, the entire shipment may include ten parcels that are delivered to three compartments via the process described with respect to FIG. 2.

The information in the data records for the compartments may be provided as part of the tracking or delivery information for the shipment, for example to notify the sender and/or the recipient of how many compartments are included, how many parcels are in the shipment or in each compartment, or the like. The recipient also may be notified of the multiple compartments upon arriving at the locker bank to retrieve the delivered shipment.

The use of "created" parcel numbers for additional locker compartments allows for senders, recipients, and couriers to use familiar techniques and interfaces to manage the multi-compartment shipments. For example, senders and recipients may track the entire shipment via the original parcel number or any of the created parcel numbers generated during the delivery process.

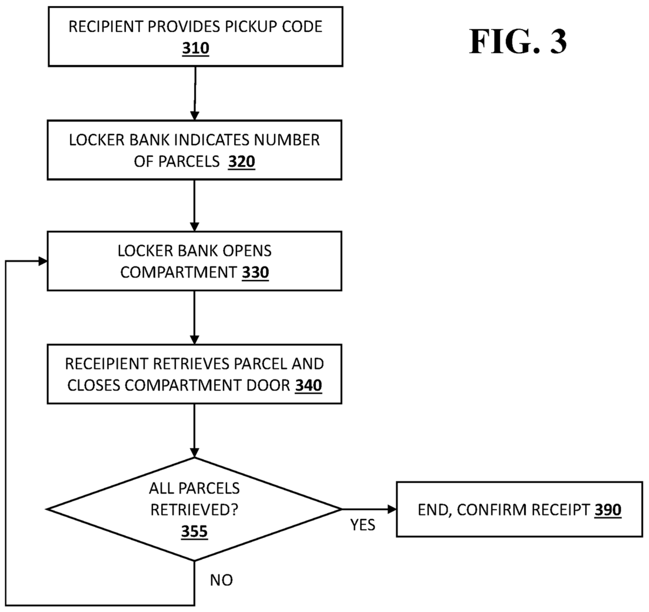

FIG. 3 shows an example process for retrieving a shipment having multiple parcels by the recipient of the shipment. As previously disclosed, at 310, the recipient may provide a "pickup code" to a locker bank where the recipient was previously notified his shipment is available to be retrieved. For example, the pickup code may be provided to the recipient via email, text message, or the like. The recipient may provide that code via a user interface of the locker bank, such as a keyboard, touchscreen, or the like, or via a scanner incorporated into the locker bank, such as by scanning a barcode that includes the pickup code in the email notification received by the recipient.

At 320, the locker bank may indicate to the recipient the number of parcels and/or locker compartments included in the shipment. For example, the user interface may display a message indicating the total number of parcels to be retrieved. Continuing the example above where the shipment includes ten parcels, if the parcels were delivered to three compartments as previously disclosed, the locker bank may display a message such as "10 parcels to pickup," or, "this shipment includes 10 parcels stored in 3 compartments," or the like, in response to receiving the pickup code from the recipient.

Also in response to receiving the pickup code from the recipient, the parcel locker may open one of the compartments storing a part of the shipment. Continuing the example above, the locker bank may open the first locker, associated with parcel number 12358. More generally, the locker bank may open multiple compartments associated with a single shipment in any order, though it may be more convenient to do so in the same order in which they were loaded by the delivery agent.

The recipient retrieves the parcel from the first-opened compartment and closes the compartment door at 340. This signals to the locker bank that the parcel in the first compartment has been retrieved. At 355, the locker bank may determine whether there are additional compartments storing parcels in the shipment. For example, referring to the data files stored for the example described previously, the locker bank may consult the data file for the first compartment and determine that there are additional compartments based on the "More Items" entry being "yes." To determine the next compartment to open, the locker bank may refer to a stored listing of sub-shipments associated with the parcel number, or it may consult the data files to identify other compartments that share the initial parcel number. Continuing the previous example, the second compartment has the parcel number 12358-2, which indicates that it is the second compartment in the shipment having original parcel number 12358 (which is also stored in the data file and available for retrieval). Once the next compartment is identified, the locker bank may open the next compartment to allow retrieval of the parcel.

The process through 355, 330, 340 may continue through all compartments and parcels in the shipment, with each compartment being opened upon closure of the previous compartment. Once the final compartment is reached, the process terminates at 390 and the locker bank system may confirm receipt of the shipment to the sender, carrier, recipient, and any other entities through the usual process, based on the original parcel number. The final compartment may be identified based on the contents of the associated data file. In this example, the third compartment includes the field "More Items" set to "no," indicating that it is the final compartment associated with the shipment.

In some cases, the locker bank user interface may be adapted to display information about multiple sub-shipments for those shipments that require the use of multiple compartments. For example, some locker bank systems according to embodiments disclosed herein may allow for an "assisted" or "search" retrieval modes, in which a recipient can search for parcels delivered to a locker bank for receipt by the recipient. In such an arrangement, the recipient may first confirm their identity, such as by entering a passcode, accessing their own account on the locker bank, or the like. The recipient may then search for their parcels that were delivered to the locker bank, for example by entering their name, a partial name, their credentials, or the like. Whereas a conventional parcel locker bank would then present basic information for the delivery, such as recipient name and associated compartment number, embodiments disclosed herein may display a list of the individual compartments assigned to the shipment. The list may include the generated parcel numbers, e.g., 1020-1, 1020-2, 1020-3, and so on as previously disclosed. Upon selection of any of the listed compartments, the locker bank may proceed with the delivery process described with respect to Figure 2. That is, the recipient need not be aware of the load order of the compartments or the functioning of the locker bank or the locker bank system in relation to the multiple compartment delivery. From the recipient's perspective, selecting any of the associated compartments may result in a complete delivery of the entire shipment.

Notably, although in some cases additions may be required to allow a locker bank to assign the newly-generated parcel numbers in addition to the original parcel number, the processes described with respect to Figures 1 and 2 allow the locker bank system to maintain the one-to-one correspondence between parcel numbers and shipments by retaining the "original" parcel number across each compartment in the multi-compartment shipment. Thus, existing locker bank systems may continue to operate as expected, even when interfacing with other systems that expect and require the same one-to-one correspondence, thereby allowing the improved behavior to operate within existing computerized locker bank systems. This also provides a mechanism for the existing locker bank systems to properly receive and track shipments that include multiple parcels that cannot fit in a single locker bank compartment, again without sacrificing interoperability in existing computerized and automated systems.

Embodiments disclosed herein may operate in both "open" and "closed," or proprietary locker bank systems. "Open" locker systems allow for multiple carriers such as national, regional, or local postal carriers, private third-party carriers such as FedEx, DHL, UPS, and the like, or combinations thereof to make use of the locker bank devices to deliver parcels to recipients and collect outbound parcels such as retail returns from shippers. Open locker systems thus may allow, for example, a retailer to use multiple carriers to ship parcels to customers and/or to receive return parcels from customers. In a closed or proprietary locker system, the management server 110 as shown in Fig. 1. may be owned and operated by a single carrier that also owns and manages locker banks within the locker bank system. In this arrangement, the locker banks 101 are only available for use by the carrier that owns them. Alternatively, the locker banks 101 may be part of an open locker network that allows for use of the locker banks by multiple carriers. In this arrangement, the management server 110 may be owned and operated by a third party, typically a non-carrier entity, such as Quadient. Carriers may interface with the management server 110 and management software 111 via any suitable long-range network, which may be the same communication network 105 used to communicate with the individual locker banks 101, or it may be a separate network, for example to obtain availability information, delivery confirmation, and the like.

Further details regarding locker banks and examples of the configuration and operation of locker bank systems are provided in U.S. Patent Nos. 11,386,389 and 11,657,365, the disclosure of each of which is incorporated by reference in its entirety. Examples of open locker networks suitable for use with embodiments disclosed herein are described in further detail in U.S. Patent Application Nos. 18/424,454, filed January 26, 2024, and published as 2024/0257042, and 18/424,439, filed January 26, 2024, and published as 2024/0257041, the disclosure of each of which is incorporated by reference in its entirety.

Embodiments disclosed herein prove improvements and extensions to computerized, automated parcel delivery and reception systems including automated parcel locker banks, open locker bank systems, and proprietary locker bank systems. Such systems rely on the computerized communication, processing, and storage systems to provide the efficiency and volume of parcel delivery required by modern shipping and receiving systems. As previously disclosed, conventional locker bank systems require a single parcel number to be assigned to each delivery to each compartment in the locker bank, and do not allow for multiple parcel numbers to be assigned to a single compartment, or for a single parcel number to be assigned to multiple compartments. As such, the processes and systems disclosed herein represent an improvement to the computerized and automated systems used in conjunction with automated locker bank systems. The processes described herein could not be performed without the specialized locker bank devices used throughout such systems. Furthermore, automated locker bank systems as disclosed herein are designed to prevent access by arbitrary users to the information stored therein, including the occupancy status of each locker, the recipient information stored in local databases at the locker bank, and the like. Accordingly, automated techniques and systems as disclosed herein are necessary to effectuate delivery of parcels to the automated parcel locker as disclosed, since the associated systems do not provide human-readable information and/or human-accessible components, other than as disclosed herein.

More generally, various embodiments may include or be embodied in the form of computer-implemented processes and apparatuses for practicing those processes. Embodiments also may be embodied in the form of a computer program product having computer program code containing instructions embodied in non-transitory and/or tangible media, such as floppy diskettes, CD-ROMs, hard drives, USB (universal serial bus) drives, or any other machine readable storage medium, such that when the computer program code is loaded into and executed by a computer, the computer becomes an apparatus for practicing embodiments of the disclosed subject matter. Embodiments also may be embodied in the form of computer program code, for example, whether stored in a storage medium, loaded into and/or executed by a computer, or transmitted over some transmission medium, such as over electrical wiring or cabling, through fiber optics, or via electromagnetic radiation, such that when the computer program code is loaded into and executed by a computer, the computer becomes an apparatus for practicing embodiments of the disclosed subject matter. When implemented on a general-purpose microprocessor, the computer program code segments configure the microprocessor to create specific logic circuits.

In some configurations, computer-readable instructions to implement techniques disclosed herein may be stored on a computer-readable storage medium and may be implemented by a general-purpose processor, execution of which may transform the general-purpose processor or a device containing the general-purpose processor into a special-purpose device configured to implement or carry out the instructions. Embodiments may be implemented using hardware that may include a processor, such as a general-purpose microprocessor and/or an Application Specific Integrated Circuit (ASIC) that embodies all or part of the techniques according to embodiments of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to embodiments of the disclosed subject matter.

The foregoing description, for purpose of explanation, has been described with reference to specific embodiments. However, the illustrative discussions above are not intended to be exhaustive or to limit embodiments of the disclosed subject matter to the precise forms disclosed. Many modifications and variations are possible in view of the above teachings. The embodiments were chosen and described in order to explain the principles of embodiments of the disclosed subject matter and their practical applications, to thereby enable others skilled in the art to utilize those embodiments as well as various embodiments with various modifications as may be suited to the particular use contemplated.

While the flow diagrams in the figures show a particular order of operations performed by certain implementations, such order is illustrative and not limiting. Other implementations and various embodiments may perform the operations in a different order, combine certain operations, perform certain operations in parallel, overlap performance of certain operations such that they are partially in parallel, and the like.

The above description includes several example implementations. However, it will be understood by one of skill in the art that the invention disclosed herein is not limited to the implementations described and can be practiced with modification and alteration within the spirit and scope of the appended claims. The description is thus illustrative instead of limiting.

## Claims

1. A method of operating a locker bank (101) in a locker bank system, the method comprising:
at a locker bank (101) comprising a plurality of locker compartments (105, 106) and a user interface, receiving (205) a user input via the user interface indicating that a shipment is being delivered to the locker bank (101), wherein the shipment is assigned a single parcel number and the shipment includes multiple parcels;
opening (210) a first compartment of the locker bank (101);
responsive to the first compartment being closed and receiving (230) a user input indicating that an additional compartment is needed for the same shipment, storing a first data record comprising:
the single parcel number assigned to the shipment;
a first compartment-specific parcel number assigned to the first compartment; and
an indication that the shipment includes multiple compartments;
opening (240) a second compartment of the locker bank (101);
storing a second data record comprising:
the single parcel number assigned to the shipment;
a second compartment-specific parcel number assigned to the second compartment;
an indication that the shipment includes multiple compartments; and
an indication that the second compartment is the final compartment storing a parcel in the shipment; and
receiving (290) a user input via the user interface indicating that the shipment is complete.

2. The method of claim 1, further comprising:
subsequent to the first compartment being opened and prior to the second compartment being closed, opening a third compartment in response to an indication that an additional compartment is needed to store a parcel in the shipment;
responsive to the third compartment being closed and receiving a user input indicating that an additional compartment is needed for the same shipment, storing a third data record comprising:
the single parcel number assigned to the shipment;
a third compartment-specific parcel number assigned to the third compartment;
an indication that the shipment includes multiple compartments; and
an indication that the third compartment is not the final compartment storing a parcel in the shipment.

3. The method of claim 2, wherein the second and third compartment-specific parcel numbers are generated from the single parcel number for the shipment.

4. The method of claim 3, wherein the second and third compartment-specific parcel numbers comprise the single parcel number and an identifier of the second and third compartments, respectively.

5. The method of claim 1, further comprising:
responsive to receiving a user input comprising a pickup code, opening the first compartment;
subsequent to opening the first compartment and responsive to the first compartment being closed, opening the third compartment;
subsequent to opening the third compartment and responsive to the third compartment being closed, opening the second compartment; and
responsive to the second compartment being closed, generating a notification that delivery of the shipment is complete.

6. The method of claim 5, further comprising:
responsive to receiving the pickup code, notifying a recipient that the shipment includes parcels stored in more than one compartment of the locker bank.

7. The method of claim 1, wherein each data record comprises an indication that the shipment includes parcels stored in more than one compartment.

8. The method of claim 7, wherein each data record comprises an indication of whether a compartment associated with the data record is the final compartment storing a parcel in the shipment.

9. The method of claim 1, further comprising:
subsequent to the first compartment being opened and prior to the second compartment being closed, opening a third compartment in response to an indication that an additional compartment is needed to store a parcel in the shipment.

10. A locker bank system comprising:
a locker bank (101) comprising:
a plurality of locker compartments (105, 106);
a computer processor; and
a user interface,
the locker bank (101) configured to:
receive (205) a user input via the user interface indicating that a shipment is being delivered to the locker bank (101), wherein the shipment is assigned a single parcel number and the shipment includes multiple parcels;
open (210) a first compartment of the locker bank (101);
responsive to the first compartment being closed and receiving (230) a user input indicating that an additional compartment is needed for the same shipment, store a first data record comprising:
the single parcel number assigned to the shipment;
a first compartment-specific parcel number assigned to the first compartment; and
an indication that the shipment includes multiple compartments;
open (240) a second compartment of the locker bank (101);
store a second data record comprising:
the single parcel number assigned to the shipment;
a second compartment-specific parcel number assigned to the second compartment;
an indication that the shipment incudes multiple compartments; and
an indication that the second compartment is the final compartment storing a parcel in the shipment; and
receive (290) a user input via the user interface indicating that the shipment is complete.

11. The locker bank system of claim 10, the locker bank (101) further configured to:
subsequent to the first compartment being opened and prior to the second compartment being closed, open a third compartment in response to an indication that an additional compartment is needed to store a parcel in the shipment;
responsive to the third compartment being closed and receiving a user input indicating that an additional compartment is needed for the same shipment, store a third data record comprising:
the single parcel number assigned to the shipment;
a third compartment-specific parcel number assigned to the third compartment;
an indication that the shipment includes multiple compartments; and
an indication that the third compartment is not the final compartment storing a parcel in the shipment.

12. The locker bank system of claim 11, wherein the second and third compartment-specific parcel numbers are generated from the single parcel number for the shipment.

13. The locker bank system of claim 12, wherein the second and third compartment-specific parcel numbers comprise the single parcel number and an identifier of the second and third compartments, respectively.

14. The locker bank system of claim 10, the locker bank (101) further configured to:
responsive to receiving a user input comprising a pickup code, open the first compartment;
subsequent to opening the first compartment and responsive to the first compartment being closed, open the third compartment;
subsequent to opening the third compartment and responsive to the third compartment being closed, open the second compartment; and
responsive to the second compartment being closed, generate a notification that delivery of the shipment is complete.

15. The locker bank system of claim 14, the locker bank (101) further configured to:
responsive to receiving the pickup code, notify a recipient that the shipment includes parcels stored in more than one compartment of the locker bank (101).

16. The locker bank system of claim 10, wherein each data record comprises an indication that the shipment includes parcels stored in more than one compartment.

17. The locker bank system of claim 16, wherein each data record comprises an indication of whether a compartment associated with the data record is the final compartment storing a parcel in the shipment.

18. The locker bank system of claim 10, the locker bank (101) further configured to:
subsequent to the first compartment being opened and prior to the second compartment being closed, open a third compartment in response to an indication that an additional compartment is needed to store a parcel in the shipment.

19. The locker bank system of claim 10, further comprising a management server (110) configured to provide information regarding the shipment to the locker bank (101).

20. The locker bank system of claim 10, further comprising at least one other locker bank (101) in communication with the management server (110) and located remotely from the locker bank (101).
